# EUROPEAN PATENT SPECIFICATION

(11) **EP 3 542 354 B1**
(45) Date of publication and mention of the grant of the patent: **06.01.2021**
(21) Application number: 17797660.2
(22) Date of filing: 16.11.2017
(51) Int. Cl.: H04B 7/185, G08G 5/00

(54) **GROUND STATION AND RELATED SYSTEM AND METHOD FOR AIR-GROUND AND GROUND-AIR COMMUNICATIONS BASED ON VDL MODE 2 AND LDACS TECHNOLOGIES**
BODENSTATION UND ZUGEHÖRIGES SYSTEM UND VERFAHREN ZUR LUFT-BODEN- UND BODEN-LUFT-KOMMUNIKATION BASIEREND AUF VDL-MODUS-2- UND LDACS-TECHNOLOGIEN
STATION AU SOL ET SYSTÈME APPARENTÉ, PROCÉDÉ POUR DESCOMMUNICATIONS AIR-SOL ET SOL-AIR BASÉES SUR DES TECHNOLOGIES VDL MODE 2 ET LDACS

(30) Priority: 16.11.2016 IT 201600115836
(43) Date of publication of application: 25.09.2019
(73) Proprietor: Leonardo S.p.A., 00195 Roma (IT)
(72) Inventor: FANTAPPIE', Pierluigi, 00131 Roma (IT); TROYER, Paolo, 00131 Roma (IT); MALTESE, Paolo, 00131 Roma (IT)
(74) Representative: Sordini, Lorenzo
(86) International application number: PCT/EP2017/079509
(87) International publication number: WO 2018/091607

(56) References cited:
- EP-A1- 2 447 929
- CN-A- 103 179 617
- Michael Schnell: "Current Status of LDACS Developments", International Civil Aviation Organization , 5 December 2014 (2014-12-05), XP002774516, Retrieved from the Internet: URL:https://www.icao.int/safety/acp/ACPWGF /The%20first%20meeting%20of%20the%20Commun ications%20Panel%20(CP%201)/CP-IP01LDACS.p df [retrieved on 2017-10-06]

## Description

### TECHNICAL FIELD OF THE INVENTION

The present invention relates, in general, to air-ground and ground-air communications for Air Traffic Control (ATC) and Airline Operational Communications (AOC) services. In particular, the present invention concerns a ground station and related system and method for air-ground and ground-air communications based on the digital data link technologies known as Very high frequency Data Link (VDL) Mode 2 and L-band Digital Aeronautical Communication System (LDACS).

### STATE OF THE ART

As is known, air-ground and ground-air communications between air traffic controllers and pilots for ATC operations have traditionally been based on voice messages transmitted/received by means of either Very High Frequency (VHF) or High Frequency (HF) voice radios. The use of voice, although it is a safe, worldwide and backward-compatible solution, suffers from several drawbacks. In particular, the current channels for ATC voice communications are very congested and, hence, liable to be affected by high interference/noise levels. In consequence, ATC voice messages may be so interfered/distorted to be unintelligible. More in general, ATC voice massages may be liable to be misunderstood by air traffic controllers and pilots. All these drawbacks may cause operational inefficiencies and, most importantly, may compromise passengers' safety.

In order to overcome the above drawbacks and to increase communication capacity and resilience against interference and noise of aeronautical radio communications, data link technologies have been adopted in aeronautical sector, so nowadays the use of datalink-based air-ground and ground-air communications is widely spread.

The very first aeronautical data communications system is the system known as ACARS (Aircraft Communications Addressing and Reporting), that was initially developed in the late 1970s by ARINC (Aeronautical Radio, Inc.). ACARS operates in VHF and HF bands, and exploits also satellite communications to provide a global coverage; moreover, it is based on the use of Minimum-Shift Keying (MSK) modulation. ACARS supports exchange of ATC, AOC, and also Airline Administrative Control (AAC) messages. For example, ACARS can be used to transmit departure clearances, information items concerning aircrafts and respective on-board systems, weather data, etc..

In the 1990s efforts were made to push transition to digital radio and to develop new technologies overcoming ACARS' limits and drawbacks, which efforts led to VDL technology development. This data link technology operates in the band 118-137 MHz and includes four versions (or modes): VDL Mode 1 (VDL1), VDL Mode 2 (VDL2), VDL Mode 3 (VDL3), and VDL Mode 4 (VDL4). Nowadays VDL2 is widely implemented.

International Civil Aviation Organization (ICAO) standard for VDL Mode 2 specifies three layers, namely subnetwork, link and physical layers.

The VDL2 subnetwork layer complies with the interface requirements provided by ICAO Aeronautical Telecommunication Network (ATN) standard, which specifies an end-to-end data protocol to be used over multiple air-ground and ground subnetworks including VDL.

The VDL2 link layer includes two sublayers, a data link sublayer and a Media Access Control (MAC) sublayer. The data link protocol is based on the ISO (i.e., International Organization for Standardization) standards used for dial-up High-Level Data Link Control (HDLC) access to X.25 networks. It provides aircraft with link establishment, management, handoff and closure to a ground station and defines an addressing space for both ground stations and aircraft. The MAC protocol is a version of Carrier Sense Multiple Access (CSMA).

The VDL2 physical layer exploits, in a 25 kHz wide VHF channel, a modulation scheme called Differential 8-Phase-Shift Keying with a symbol rate of 10,500 symbols per second. The raw (uncoded) physical layer bit rate is thus 31.5 kilobit/second. This requires the use of VHF digital radios.

The VDL2 has been selected by the European Union, under the technical supervision of EUROCONTROL (i.e., the European organization for the safety of air navigation), as a technology enabling interoperability among Air Navigation Service Providers (ANSPs) according to the Single European Sky (SES) implementing rules.

The VDL Mode 2 is primarily used for AOC and ATC applications/services. The former are related to routine airline operations and are used by airlines to optimize flight operations and their related costs, and are not safety-critical, while the latter have been world-wide defined by the ICAO as a controller-to-pilot data link message suite that allows to communicate with airplanes, during flight, more efficiently than using traditional voice communications. The aforementioned suite is known with the acronym of CPDLC ("Controller-to-Pilot Data Link Communications") and is based on ATN protocol. ATC and AOC applications/services have different performance requirements (in particular, Quality-of-Service-related (QoS-related) requirements for ATC are more stringent than those for AOC) and are provided by a plurality of Aeronautical Communications Service Providers (ACSPs), each of them managing its own communication network. Nowadays, there are only two ACSPs: ARINC and SITA. This means that, to access ATC and AOC services, each airline company must subscribe to at least one of said two ACSPs.

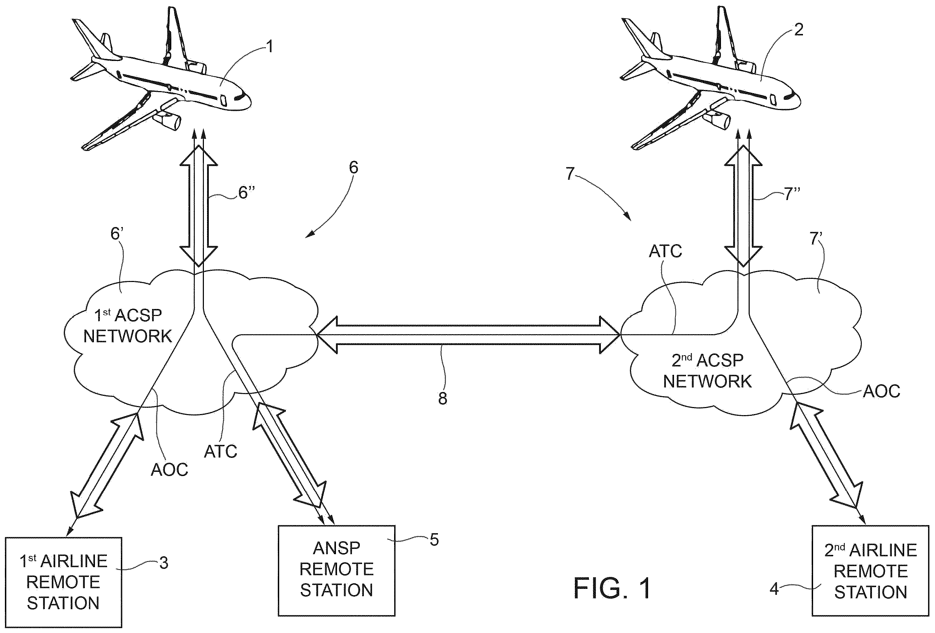

Figure 1 schematically illustrates a typical scenario related to datalink-based air-ground and ground-air communications at the present day. In particular, as shown in Figure 1, a first aircraft 1 and a second aircraft 2 communicate with a first airline remote station 3 and a second airline remote station 4, respectively, and with a common ANSP remote station 5.

The first airline remote station 3 is directly managed by a first airline company owning the first aircraft 1, while the second airline remote station 4 is directly managed by a second airline company owning the second aircraft 2; instead, the ANSP remote station 5 is directly managed by an ANSP. The first airline company has a subscription to a first ACSP network 6 (such as the one owned by ARINC), while the second airline company has a subscription to a second ACSP network 7 (such as the one owned by SITA). Said first and second ACSP networks 6 and 7 comprise, each, a respective ground network portion 6', 7' connected to the respective first/second aircraft 1, 2 through a respective VDL2 bidirectional air-ground connection 6", 7".

In particular, the first ACSP network 6 supports AOC message exchange between the first aircraft 1 and the first airline remote station 3 and ATC message exchange between the first aircraft 1 and the ANSP remote station 5, while the second ACSP network 7 supports AOC message exchange between the second aircraft 2 and the second airline remote station 4 and ATC message exchange between the second aircraft 2 and the ANSP remote station 5. It is clear that the ANSP managing said ANSP remote station 5, in order to be able to provide ATC services, needs a subscription to at least one ACSP network (in particular, in the example shown in Figure 1 an ANSP's subscription to the first ACSP network 6 is assumed). However, the ANSP managing the ANSP remote station 5 has no control over the ATC messages transmitted through said first ACSP network 6.

Additionally, the ground network portion 6', 7' of the first and second ACSP network 6 and 7 are connected to each other by means of a connection 8 to allow ATC messages sent by the second aircraft 2 to be routed from the second ACSP network 7 (in particular, from the respective ground network portion 7') to the first ACSP network 6 (in particular, to the respective ground network portion 6') via said connection 8, and then up to the ANSP remote station 5 via said first ACSP network 6 (in particular, via the respective ground network portion 6'). Clearly, the inverse routing applies to the ATC messages sent by the ANSP remote station 5 to the second aircraft 2.

In more general terms, at the present day an ANSP, that wants to provide ATC services based on VDL2 technology, has only two alternatives: buying the VDL2 service by one or both the ACSPs (i.e., ARINC and SITA), or setting up its own network. The former approach can be costly on the medium-long term and the ANSP should rely on a third-party network whose performance are not controlled by said ANSP and are likely to be not adequate for ATC applications; the latter approach is limited by two main factors.

The first limiting factor depends on the VDL2 airborne system. In fact, typically, on board each aircraft there is a single VDL2 radio that must be shared for ATC and AOC operations and that can establish a connection with a single ground station (namely, the ground station of the ACSP with which the airline company has a subscription). Therefore, a VDL2 ground network directly managed by an ANSP would not be able to directly interface with an on-board VDL2 radio, unless an agreement between the ANSP and an ACSP is made so that each ground station of the ANSP is identified as a ground station of the ACSP with which the airline company has a contract. Nevertheless, in this case the ANSP is able to directly control only the aircrafts having a subscription with this ACSP partner.

The second limiting factor is related to the nature of the VDL2 networks, that currently operate on shared frequencies (in fact, the VDL2 radio link does not provide for different frequencies to be used to avoid interference between ground stations; in other words, it is not a "cellular" radio system). This means that two ground-to-air VDL2 communication channels (one belonging to an ACSP, the other to an ANSP) in a same area will necessarily interfere with each other.

The conclusion is uncomfortable for ANSPs, which find it difficult to provide ATC services based on VDL2 technology with a satisfactory QoS.

Moreover, as illustrated in Figure 1, a connection among all the existing ACSP networks is required in order to allow ATC messages sent by an aircraft having a subscription to a certain ACSP to reach an ANSP having a subscription to a different ACSP.

EP 2 447 929 B1 provides a solution (or at least a partial solution) to the above drawbacks related to VDL2-based air-ground and ground-air communications.

In particular, EP 2 447 929 B1 relates to a ground station for working in an air-ground network for air-to-ground and ground-to-air communications, the air-ground network including at least an ANSP remote station, a first airline remote station, and a second airline remote station; the ground station comprising:
- a first communication interface connectable to the first airline remote station configured for providing for a first segregated data flow for AOC message exchange between the ground station and the first airline remote station;
- a second communication interface connectable to the ANSP remote station configured for providing for a second segregated data flow for ATC message exchange between the ground station and the ANSP remote station;

- a third communication interface connectable to the second airline remote station configured for providing for a third segregated data flow for AOC message exchange between the ground station and the second airline remote station;
- means configured for establishing a broadcast wireless communication channel of VDL Mode 2 type for air-to-ground and ground-to-air communications;
- means configured for establishing, over said broadcast wireless communication channel, a first communication data link with a first aerial vehicle, the first communication data link being a VDL Mode 2 digital data link;
- means configured for establishing, over said broadcast wireless communication channel, a second communication data link with a second aerial vehicle, the second communication data link being a VDL Mode 2 digital data link;
- means configured for exchanging, using said first and second communication data links, ATC messages between the ANSP and the first and, respectively, the second aerial vehicle;
- means configured for exchanging, using said first communication data link, AOC messages between the first airline remote station and the first aerial vehicle; and
- means configured for exchanging, using said second communication data link, AOC messages between the second airline remote station and the second aerial vehicle.

Additionally, since the VHF band is becoming more and more heavily congested, many efforts were made in the past years to develop new aeronautical communication technologies operating in other frequency band. In particular, the L band was identified, primarily due to its own peculiar propagation characteristics, as the frequency band for future air-ground and ground-air communications, and the technology known as L-band Digital Aeronautical Communication System (LDACS) was selected as the most promising candidate for next-generation aeronautical communications.

More in detail, at the beginning, two different implementations were proposed for LDACS, namely: a first one (called LDACS1) based on a Frequency-Division Duplex (FDD) configuration exploiting Orthogonal Frequency-Division Multiplexing (OFDM) modulation techniques, and a second one (called LDACS2) based on a Time-Division Duplex (TDD) configuration exploiting a binary modulation of the Continuous-Phase Frequency-Shift Keying (CPFSK) and/or Gaussian Minimum-Shift Keying (GMSK) type.

For further details about LDACS, reference can be made, for example, to Michael Schnell, "Current Status of LDACS Developments", International Civil Aviation Organization (ICAO), 5 December 2014 (at the filing date of the present application, available at the link: https://www.icao.int/safety/acp/ACPWGF/The%20first%20meetin g%20of%20the%20Communications%20Panel%20(CP%201)/CP-IP01LDACS.pdf). Said paper presents current status of LDACS development with main focus to achievements and current status of LDACS1 that, nowadays, seems to be the LDACS implementation which will be actually carried out in the next future (in fact, LDACS1 is considerably more mature than LDACS2). In particular, said paper mainly describes LDACS1 radio features.

### OBJECT AND SUMMARY OF THE INVENTION

In general terms, current and future systems for air-ground and ground-air communications (both voice and data) are characterized by the following main features:
- global character of the communications - both ATC and AOC services must be available during all the flight phases;
- radio resource shortage - the current frequency band on which the ATC/AOC data communications are allocated is the ICAO VHF band (118-137 MHz); this band is quite totally occupied by ATC voice communications, and the portion of the spectrum given for data communications is even shared between ANSPs for ATC support and airlines for AOC; for the future, the frequency range 960-1164 MHz of the L band has been assigned to ICAO for data communications; however, the L band is not only shared between ATC and AOC, but it is also shared with the NATO Tactical Data Link (TDL) known as Link 16, the secondary surveillance radar - Automatic Dependent Surveillance-Broadcast (ADS-B), and the Distance Measuring Equipment (DME); this scenario is likely to strongly limit the LDACS capacity in the medium/long term;
- data service sharing across the air-ground-air wireless network - this constraint is related to the availability of a single radio transponder on board the aircraft; for example, in case of VHF, except for the voice transceiver that is provided in 1+1 configuration for safety reasons, only one VHF Data Radio (VDR) is provided for both ACARS and VDL Mode 2 operations, and this fact entails that the airborne data system is able to enter the VDL Mode 2 only after a communication on ACARS frequencies (that still remains the "default" mode of operation), and that both AOC and ATC communications shall rely on the same narrowband, low-rate radio resources; moreover, unfortunately, the same situation is foreseen also for LDACS, as also in this case only one transponder is foreseen on board the aircraft.

Moreover, as previously explained, the AOC service, based on ACARS and VDL Mode 2, is worldwide provided by only two ACSPs (SITA and ARINC) with which an airline is supposed to have a contract (or two, in few cases). In consequence, an aircraft belonging to an airline having a contract with one of these two ACSPs cannot establish a link with a datalink ground system managed by the other ACSP. Additionally, there are some airlines, agencies and air forces that do not use AOC service.

The fact that nowadays, for the AOC service, only two ACSPs are available entails that an ANSP, which has in charge to provide the same ATC services for all aircrafts, is obliged to rely on two different networks (i.e., SITA's and ARINC's networks), sharing all or part of the spectrum, or to establish two separate commercial agreements with both the ACSPs. Besides the economical impact of such a scenario on an ANSP, there are other drawbacks to be highlighted:
- the current ground infrastructures of the two ACSPs have been conceived for commercial services; therefore, it is unlikely that these infrastructures will be able to support safety-critical and performance-critical services, such as CPDLC and Automatic Dependent Surveillance-Contract (ADS-C), irrespective of any Service Level Agreement (SLA) that can be agreed by an ACSP and an ANSP;
- the isofrequential nature of the VDL Mode 2, the CSMA technology used as channel access method, and the lack of a priority mechanism produce a lot of uplink packet collisions on the air interface due to "hidden" ground stations, which packet collisions are equally distributed between AOC and ATC services; in this way, VDL Mode 2 performance, in terms of latency and bandwidth, is drastically reduced, thereby causing the so-called Provider Aborts (PA) towards the aircraft on ATC services (i.e., unexpected closures of aircraft CPDLC sessions);
- additionally, an ANSP cannot guarantee ATC service for all the aircrafts, because those belonging to the so-called "non-AOC airlines" (i.e., airlines which does not have any ACSP subscription) cannot establish any link with any ground system (the same applies also to the aircrafts of the air forces without any ACSP subscription).

The introduction of LDACS can alleviate the bandwidth restriction and the lack of priority mechanism, but it does not change the basic problem, i.e., the sharing of the same resources between AOC and ATC and the need for different infrastructures on the ground for the two ACSPs for one and the same service. Moreover, LDACS currently foresees support for layer 3 ATN-IPS (based on IPv6 technology), but not for ATN-OSI (i.e., Aeronautical Telecommunication Network (ATN) Open Systems Interconnection (OSI)), which is currently implemented on aircraft and ground.

Some of the above drawbacks are mitigated by the technology disclosed in EP 2 447 929 B1. Anyway, unfortunately, the ground station according to EP 2 447 929 B1 does not allow management of non-AOC aircrafts (i.e., aircrafts belonging to airlines or air forces that do not have any ACSP subscription), is specifically designed to operate in the current scenario where only two ACSPs are present, and does not provide for any QoS mechanism.

Therefore, object of the present invention is that of providing a technology that:
- in general, overcomes, at least in part, the above technical drawbacks of the aeronautical communications systems based on VDL Mode 2 and LDACS technologies; and,
- in particular, solves the above technical problems not solved by EP 2 447 929 B1 and provides an LDACS support for ATN-OSI layer 3 protocol common to VDL Mode 2 in order to create an integrated infrastructure on the ground.

This and other objects are achieved by the present invention in that it relates to a ground station for air-ground and ground-air communications, as defined in the appended claims.

### DESCRIPTION OF THE DRAWINGS

For a better understanding of the present invention, preferred embodiments, which are intended purely by way of non-limiting examples, will now be described with reference to the attached drawings (all not to scale), wherein:
- Figure 1 schematically illustrates a typical scenario related to datalink-based air-ground and ground-air communications at the present day;
- Figure 2 schematically illustrates an end-to-end architecture of a communication system for providing air-ground and ground-air communications related to AOC and ATC services, according to a preferred embodiment of the present invention;
- Figure 3 schematically illustrates a priority mechanism for uplink packets to be transmitted based on VDL2 technology, according to an aspect of the present invention; and
- Figure 4 schematically illustrates LDACS framing structure and broadcast messages.

### DETAILED DESCRIPTION OF PREFERRED EMBODIMENTS OF THE INVENTION

The following discussion is presented to enable a person skilled in the art to make and use the invention. Various modifications to the embodiments will be readily apparent to those skilled in the art, without departing from the scope of the present invention as claimed. Hence, the present invention is not intended to be limited to the embodiments shown and described, but is to be accorded the widest scope consistent with the principles and features disclosed herein and defined in the appended claims.

The present invention concerns a ground station for air-ground and ground-air communications, configured to provide an airline operational communications (AOC) service and an air traffic control (ATC) service.

In particular, said ground station includes gateway means coupled to:
- communications networks (e.g., ACSP networks) connected to airline remote stations for providing the AOC service; and
- one or more air-ground routers connected through one or more boundary intermediate systems to one or more Air Navigation Service Provider (ANSP) remote stations for providing the ATC service.

The gateway means are configured to:
- receive, through the communications networks, uplink AOC messages that are sent by the airline remote stations, carry information items related to the AOC service, and are intended to be transmitted, each, to a respective one of first aircrafts requiring both the AOC service and the ATC service; and
- receive, from the air-ground router(s), first uplink ATC messages that are sent by the ANSP remote station(s) to said air-ground router(s) through the boundary intermediate system(s), carry information items related to the ATC service, and are intended to be transmitted, each, to a respective first aircraft.

The ground station further includes ground-based VDL2 wireless communication means coupled to the gateway means and configured to:
- carry out radio communications based on VDL Mode 2 technology;
- receive, based on VDL Mode 2 technology, first downlink AOC messages and first downlink ATC messages from one or more of the first aircrafts; and
- provide the gateway means with the first downlink AOC messages and the first downlink ATC messages.

The first downlink AOC messages carry information items related to the AOC service, and are intended to be routed, each, through a respective communications network to reach a respective airline remote station.

The first downlink ATC messages carry information items related to the ATC service, and are intended to be routed, each, to a respective air-ground router to reach a respective ANSP remote station through the boundary intermediate system(s).

The gateway means are configured to route:
- each first downlink AOC message through the respective communications network to reach the respective airline remote station; and
- each first downlink ATC message to the respective air-ground router to reach the respective ANSP remote station through the boundary intermediate system(s).

The ground station further includes ground-based LDACS wireless communication means coupled to the gateway means and configured to:
- carry out radio communications based on LDACS technology;
- receive, based on LDACS technology, second downlink AOC messages and second downlink ATC messages from one or more of the first aircrafts, and third downlink ATC messages from one or more second aircrafts requiring only the ATC service; and
- provide the gateway means with the second downlink AOC messages, the second downlink ATC messages and the third downlink ATC messages.

The ground-based VDL2 wireless communication means are further configured to:
- receive, based on VDL Mode 2 technology, fourth downlink ATC messages from one or more of the second aircrafts; and
- provide the gateway means with the fourth downlink ATC messages.

The second downlink AOC messages carry information items related to the AOC service, and are intended to be routed, each, through a respective communications network to reach a respective airline remote station.

The second, third and fourth downlink ATC messages carry information items related to the ATC service, and are intended to be routed, each, to a respective air-ground router to reach a respective ANSP remote station through the boundary intermediate system(s).

The gateway means are further configured to:
- route each second downlink AOC message through the respective communications network to reach the respective airline remote station;
- route each second, third and fourth downlink ATC message to the respective air-ground router to reach the respective ANSP remote station through the boundary intermediate system(s);
- receive, from the air-ground router(s), second uplink ATC messages that are sent by the ANSP remote station(s) to said air-ground router(s) through the boundary intermediate system(s), carry information items related to the ATC service, and are intended to be transmitted, each, to a respective second aircraft; and
- selectively provide the uplink AOC messages, the first uplink ATC messages and the second uplink ATC messages to the ground-based VDL2 wireless communication means and/or the ground-based LDACS wireless communication means.

The ground-based VDL2 wireless communication means are further configured to:
- put in one or more low-priority queues the uplink AOC messages received from the gateway means;
- put in one or more high-priority queues the first and second uplink ATC messages received from the gateway means;
- transmit, based on VDL Mode 2 technology, the first and second uplink ATC messages present in the high-priority queue(s) to the respective first and second aircrafts; and
- transmit, based on VDL Mode 2 technology, the uplink AOC messages present in the low-priority queue(s) to the respective first aircrafts only when there are no first and second uplink ATC messages in the high-priority queue (s) .

The ground-based LDACS wireless communication means are further configured to periodically broadcast over one or more predefined LDACS broadcast channels:
- groups of predefined LDACS broadcast messages, wherein said groups of predefined LDACS broadcast messages carry information items identifying the communications networks (i.e., the communications networks (e.g., the ACSP networks) connected to the ground station and, hence, available for AOC purposes to the first aircrafts served by said ground station); and
- single predefined LDACS broadcast messages carrying address(es) of the air-ground router(s) (i.e., the address(es) (conveniently, the ATN-OSI address(es)) of the air-ground router(s) connected to the ground station and, hence, available for ATC purposes to the first and second aircrafts served by said ground station).

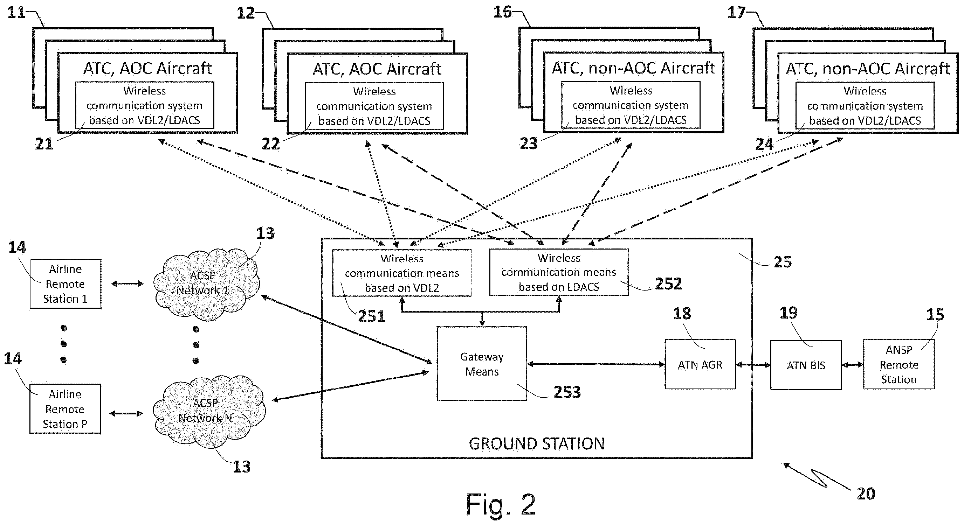

For a better understanding of the present invention, Figure 2 schematically illustrates an end-to-end architecture of a communication system 20 for providing air-ground and ground-air communications related to AOC and ATC services, according to a preferred embodiment of the present invention.

The communication system 20 supports AOC communications between:
- first and second aircrafts (in Figure 2 denoted by 11 and 12, respectively) belonging to, respectively, a first and a second airline having a subscription to at least an ACSP network 13 for implementing one or more AOC services; and
- airline remote stations 14 (including airline remote stations owned and managed by said first and second airlines).

In particular, the communication system 20 supports AOC communications between each first/second aircraft 11,12 and a respective airline remote station 14 belonging to (and managed by) the first/second airline which said first/second aircraft 11,12 belongs to.

Moreover, the communication system 20 supports also ATC communications between at least one ANSP remote station 15 (belonging to, and managed by an ANSP) and the first and second aircrafts 11 and 12, and also between:
- said ANSP remote station 15; and
- third and fourth aircrafts (in Figure 2 denoted by 16 and 17, respectively) belonging to one or more airlines and/or organizations that do not have any ACSP subscription (i.e., non-AOC airlines and/or military air-forces); for example, the third aircrafts 16 could conveniently belong to a third airline, in particular a non-AOC airline, and the fourth aircrafts 16 could conveniently belong to a military air-force.

In particular, the communication system 20 includes:
- first airborne wireless communication systems 21, each installed on board a respective first aircraft 11, wherein said first airborne wireless communication systems 21 are configured to carry out radio communications based on VDL Mode 2 and/or LDACS technology;
- second airborne wireless communication systems 22, each installed on board a respective second aircraft 12, wherein said second airborne wireless communication systems 22 are configured to carry out radio communications based on VDL Mode 2 and/or LDACS technology;
- third airborne wireless communication systems 23, each installed on board a respective third aircraft 16, wherein said third airborne wireless communication systems 23 are configured to carry out radio communications based on VDL Mode 2 and/or LDACS technology;
- fourth airborne wireless communication systems 24, each installed on board a respective fourth aircraft 17, wherein said fourth airborne wireless communication systems 24 are configured to carry out radio communications based on VDL Mode 2 and/or LDACS technology; and
- a ground station 25, that is installed on the ground and that includes first and second ground-based wireless communication means (denoted as 251 and 252, respectively) configured to carry out radio communications based on VDL Mode 2 and LDACS technology, respectively.

Conveniently, the first, second, third and fourth airborne wireless communication systems 21, 22, 23 and 24 integrate, each, at least one respective VDL2 radio and/or at least one respective LDACS radio, the first ground-based wireless communication means 251 include one or more VDL2 radios, and the second ground-based wireless communication means 252 include one or more LDACS radios.

In detail, the first ground-based wireless communication means 251 are configured to exchange:
- AOC and ATC messages with the first and second airborne wireless communication systems 21 and 22 by carrying out radio communications based on VDL Mode 2 technology; and
- ATC messages with the third and fourth airborne wireless communication systems 23 and 24 by carrying out radio communications based on VDL Mode 2 technology.

Moreover, the second ground-based wireless communication means 252 are configured to exchange:
- AOC and ATC messages with the first and second airborne wireless communication systems 21 and 22 by carrying out radio communications based on LDACS technology; and
- ATC messages with the third and fourth airborne wireless communication systems 23 and 24 by carrying out radio communications based on LDACS technology.

Additionally, the ground station 25 further includes gateway means 253, that are coupled to said first and second ground-based wireless communication means 251 and 252 and connected to:
- the airline remote stations 14 through a plurality N of ACSP networks 13 (N being an integer equal to, or higher than two); and
- the ANSP remote station 15 through one or more Air-Ground Routers (AGR(s)) 18 based on ICAO's ATN standard and one or more Boundary Intermediate Systems (BIS(s)) 19 based on ICAO's ATN standard (a single AGR 18 and a single BIS 19 being shown in Figure 2 only for the sake of illustration simplicity).

For each first/second aircraft 11,12 served by the ground station 25, the gateway means 253 are configured to:
- route downlink AOC messages received by the first and/or second ground-based wireless communication means 251,252 (based on, respectively, VDL2 and/or LDACS technology) from the first/second airborne wireless communication system 21,22 installed on board said first/second aircraft 11,12 to the respective airline remote station 14 belonging to (and managed by) the first/second airline (which said first/second aircraft 11,12 belongs to) through one or more ACSP networks 13 which said respective airline remote station 14 is connected (directly or indirectly) to;
- provide the first and/or second ground-based wireless communication means 251,252 with uplink AOC messages received from the airline remote station 14 belonging to (and managed by) the first/second airline through one or more ACSP networks 13 (which said airline remote station 14 is connected, directly or indirectly, to) and addressed to said first/second aircraft 11,12, wherein the first/second ground-based wireless communication means 251,252 are configured to transmit (based on, respectively, VDL2 and/or LDACS technology) said uplink AOC messages to the first/second airborne wireless communication system 21,22 installed on board said first/second aircraft 11,12;

- route downlink ATC messages received by the first and/or second ground-based wireless communication means 251,252 (based on, respectively, VDL2 and/or LDACS technology) from the first/second airborne wireless communication system 21,22 installed on board said first/second aircraft 11,12 to the ANSP remote station 15 in charge of providing said first/second aircraft 11,12 with ATC service, wherein said downlink ATC messages are routed to said ANSP remote station 15 through the AGR(s) 18 and the BIS(s) 19; and
- provide the first and/or second ground-based wireless communication means 251,252 with uplink ATC messages received from the ANSP remote station 15 through the AGR(s) 18 and the BIS(s) 19 and addressed to said first/second aircraft 11,12, wherein the first/second ground-based wireless communication means 251,252 are configured to transmit (based on, respectively, VDL2 and/or LDACS technology) said uplink ATC messages to the first/second airborne wireless communication system 21,22 installed on board said first/second aircraft 11,12.

In other words, in use, the ground station 25, by means of the first and the second ground-based wireless communication means 251 and 252 and the gateway means 253, provides the first and second aircrafts 11 and 12 (served by said ground station 25) with both AOC and ATC services.

Moreover, for each third/fourth aircraft 16,17 served by the ground station 25, the gateway means 253 are configured to:
- route downlink ATC messages received by the first and/or second ground-based wireless communication means 251,252 (based on, respectively, VDL2 and/or LDACS technology) from the third/fourth airborne wireless communication system 23,24 installed on board said third/fourth aircraft 16,17 to the ANSP remote station 15 in charge of providing said third/fourth aircraft 16,17 with the ATC service, wherein said downlink ATC messages are routed to said ANSP remote station 15 through the AGR(s) 18 and the BIS(s) 19; and
- provide the first and/or second ground-based wireless communication means 251,252 with uplink ATC messages received from the ANSP remote station 15 through the AGR(s) 18 and the BIS(s) 19 and addressed to said third/fourth aircraft 16,17, wherein the first/second ground-based wireless communication means 251,252 are configured to transmit (based on, respectively, VDL2 and/or LDACS technology) said uplink ATC messages to the third/fourth airborne wireless communication system 23,24 installed on board said third/fourth aircraft 16,17.

In other words, in use, the ground station 25, by means of the first and the second ground-based wireless communication means 251 and 252 and the gateway means 253, provides the third and fourth aircrafts 16 and 17 (served by said ground station 25) with the ATC service.

Actually, the ground station 25 is designed so as to implement a plurality of "virtual" ACSP ground stations by appearing to the aircrafts as if it belongs to the domain of any single ACSP; therefore, all the first and second aircrafts 11 and 12 can connect to the desired network.

As for the ATC-only, non-AOC aircrafts belonging to airlines and/or air forces without contract with an ACSP (i.e., the third and fourth aircrafts 16 and 17), they can connect to a predefined system mask provided by the ground station 25; as this predefined system mask is not associated with any ACSP network 13, there is no possibility that messages to/from the ATC-only, non-AOC aircrafts (i.e., the third and fourth aircrafts 16 and 17) can be exchanged over the ACSP networks 13. On the other hand, the access to the ATC service (through ATN) is guaranteed.

As for the ATC service, it can be conveniently provided by the ANSP managing the ANSP remote station 15 for all the aircrafts 11, 12, 16 and 17 served by the ground station 25. Alternatively, the ground station 25 could be advantageously exploited to serve a plurality of ANSP remote stations; namely, the ground station 25 could conveniently be connected to a plurality of ANSP remote stations (owned and managed by different ANSPs) trough one or more AGRs 18 and one or more BISs 19.

Preferably, the AGR(s) 18 is/are external to the ground station 25 (as in the current solutions). However, the ground station 25 and the AGR(s) 18 could be also conveniently integrated into a single ground system.

Moreover, as it will be described in detail in the following, the ground station 25 is designed to implement a priority mechanism meeting QoS-related requirements for ATC communications.

A preferred method of operation of the communication system 20 in relation to VDL2 technology will be described in the following.

In particular, the "virtualization" mechanism is based on a predefined software architecture of the ground station 25, that is preferably programmed to activate multiple instances of the Aviation VHF Link Control (AVLC), Link Management Entity (LME) and v8208 (i.e., X.25 protocol part of the VDL2 stack) layers of the VDL Mode 2 protocol, one for each ACSP network 13, each one with a different configuration profile. One of the most important configuration parameters is the "VDL System Mask", unique for each ACSP network 13, that is broadcasted to all aircrafts on the so-called Ground Station Information Frames (GSIFs).

In use, the ground station 25 broadcasts every GSIF belonging to each ACSP network 13 in an interlaced mode, so that the temporal interval between two GSIFs belonging to the same ACSP network 13 is maintained within the time constraints imposed by the VDL Mode 2 standard.

This time constraint is related to the couple of TG3 and TG4 parameters, so that the GSIF transmission interval is **min(*TG*3ₘᵢₙ;*TG*4ₘᵢₙ)** in the worst case (100 sec), following the principles according to EP 2 447 929 B1, but with the following improvements.

First of all, the number of instances is not limited to two, but it is configurable, as well as the availability of the ground ACSP network interface (that could not be currently existing for some ACSPs or stakeholders); the upper limit of available ACSP networks 13 depends on the traffic and multi-frequency scenarios. However, considering a very simple reference scenario with GSIF timers spaced by 20 sec, and in order to guarantee the minimum GSIF transmission time, the number of ACSP networks is conveniently equal to four (i.e., the current two, plus a non-AOC, plus a third commercial). Nevertheless, more ACSP networks 13 can be managed by properly tuning the (TG3, TG4) timers for each VDL Mode 2 instance.

Additionally, the ATC messages that have to be uplinked to the various aircraft are protected by a proper priority rule. This rule can be conveniently implemented according to the IPI/EIPI field of the first two octets of the AVLC INFO field. In fact, these octets currently identify if the VDL Mode 2 INFO packet is an ACARS packet (which is "tagged" with "FFFF") or a v8208 one (not tagged). Therefore, on uplink side, the v8208 packets coming from the ATN network (i.e., from the ANSP remote station 15) do not present this tag and, hence, are sent to the relevant AVLC state machine and put in its higher priority queue, while every packet coming from one of the ACSP networks 13 is sent to the relevant AVLC state machine and put in its lower priority queue. Lower priority packets are transmitted only after the higher priority queue is empty. In this way, the uplink traffic, which is the most critical one, due to the "hidden" ground station problem, is protected in high traffic scenarios, in order to satisfy the CPDLC and ADS-C end-to-end performances.

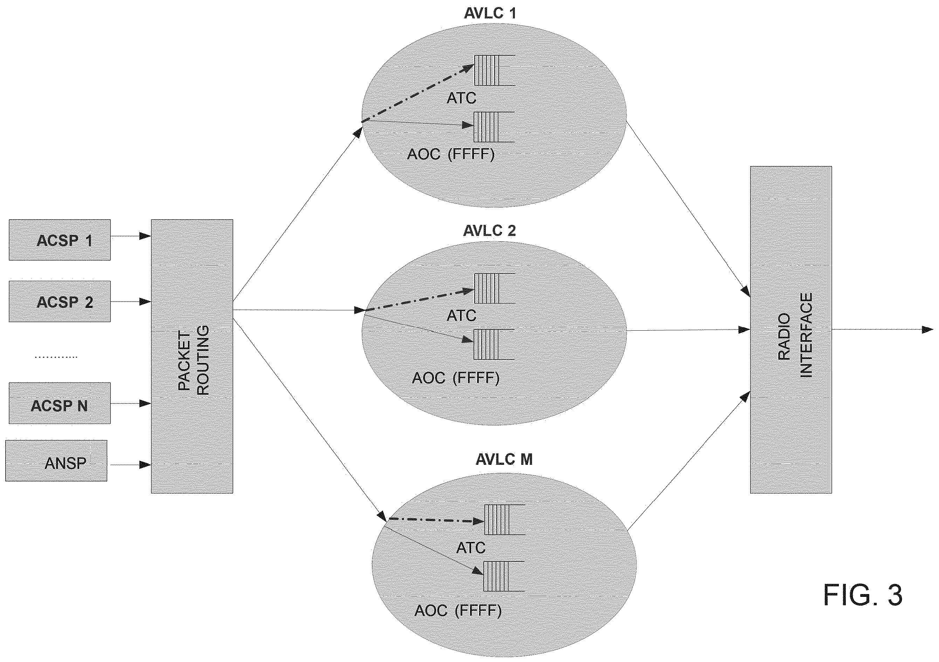

In this connection, Figure 3 schematically illustrates the above priority mechanism implemented by the first ground-based wireless communication means 251. In particular, packets coming from the ACSP networks 13 and the ANSP remote station 15 are routed to the various AVLC state machines, in which the ATC-related packets (i.e., the non-tagged v8208 packets) coming from the ANSP remote station 15 are put in a respective high priority queue, while the AOC-related packets (i.e., the FFFF-tagged ones) coming from the ACSP networks 13 are put in a respective low priority queue. The packets in the low priority queue of an AVLC state machines are transmitted only when the respective high priority queue is empty.

It is worth noting that the above VDL2 priority mechanism according to the present invention cannot be considered at all as a mere activity of administrative character performable by an operator or administrator. In fact, currently, VDL Mode 2 does not foresee any priority mechanism, thereby being affected by several technical problems, such as uplink packet collisions due to the "hidden" ground station problem, the consequent Provider Aborts (PA) (i.e., unexpected closures of aircraft CPDLC sessions) and, hence, the associated safety-related issues. In particular, the CPDLC performances, as specified in the document EUROCAE ED-120, indicate a well-defined end-to-end latency time that cannot be exceeded, otherwise the CPDLC session fails and both controllers and pilots are obliged to revert to voice communications (with all the associated problems previously described). Therefore, since the abidance of latency time is mandatory for global air-ground interoperability (as required by the EC regulation 552/2004 - Seamless Operation), it is clear that the VDL2 priority mechanism according to the present invention represents a simple, smart and automatic (i.e., not performable by any operator/administrator) solution to the above technical issues, which solution allows implementing a priority mechanism without introducing any change in VDL2 standard. Thence, in view of the foregoing, the VDL2 priority mechanism according to the present invention should necessarily be considered as an innovative solution having technical character.

Instead, as far as LDACS technology is concerned, a preferred method of operation of the communication system 20 in relation to LDACS technology will be described in the following.

In particular, LDACS A/G sub-system is a multi-application cellular broadband system capable of simultaneously providing various kinds of Air Traffic Services (ATSs) and aeronautical operational control communications services from deployed ground stations.

The LDACS A/G sub-system provides a bi-directional point-to-point addressed data link comprising Forward Link (FL) and Reverse Link (RL), as well as optional broadcast capabilities (FL only).

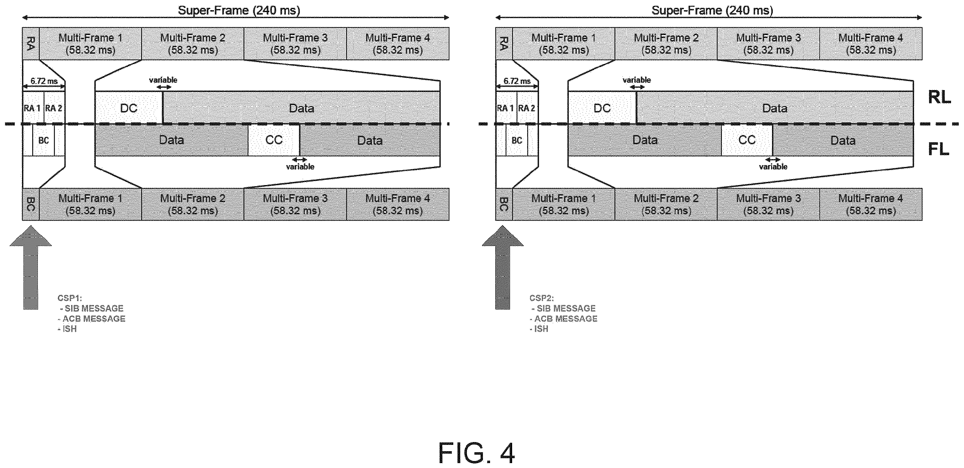

In this respect, Figure 4 schematically illustrates LDACS framing structure and broadcast messages. It is worth noting that Figure 4 is immediately clear to those skilled in the aeronautical communications sector.

According to LDACS, in order to let aircrafts to perform mobility management operations on the system (entry, leave and handoff), the following information must be broadcast:
- the ground station identifier sent on the BCCH channel related to every frame by means of the SIB message ("System Identification Broadcast");
- the Adjacent Cell Broadcast (ACB) message;
- the Scanning Table Message (STB);
- the Ground Station Position Broadcast (GSPB); and
- the Ground Station Capability Broadcast (GSCB).

SIB, ACB and STB must be transmitted periodically (worst case: once per super-frame), while GSPB and GSCB are optional.

Assuming a number of eighteen neighboring ground stations (i.e., cell planning worst case, according to the Co-Channel protection ratio typical of LDACS physical layer), the broadcast message length is the following:
- SIB - 66 bits;
- ACB and STB - 230 bits each;
- GSPB - 1382 bits;
- GSCB - 266 bit.

Since the useful bit capacity is 528 bits for BC1 and BC3, and 1000 bits for BC2, and given the rules about "where" broadcast messages have to be transmitted (e.g., SIB on BC2, ACB on BC1&3, the other ones everywhere), it is possible to assume that the basic ground station information for aircraft mobility management can be transmitted every 240 msec (i.e. 1 super-frame), while the other ones (e.g. GSPB and GSCB) can be broadcast with a lower periodicity using the residual BC1, ..., BC3 capacity (that shall also include the VSB channel, that gives information about the voice links supported by each ground station).

An aspect of the present invention, which does not require any change of the LDACS protocol structure, concerns the following features: since the LDACS protocol allows sending different SIB/ACB/STB messages with different ground station addresses on different LDACS frames (i.e., every 240 ms), it is possible to broadcast tuples of interlaced (SIB;ACB;STB) messages, each tuple referring to a different system identifier.

Moreover, assuming to share the infrastructure with five different ACSP networks 13, the (SIB;ACB;STB) message repetition for each ACSP network 13 is 2.4 s.

Each (SIB;ACB;STB) tuple of messages is associated with a proper instance of LDACS state machine (Data Link Service (DLS) and LME sublayers), which is in turn associated with the proper ACSP network 13 with its own ACSP network address and interface.

As for prioritized traffic in LDACS, it is worth noting that, unlike VDL Mode 2, LDACS manages up to seven priority levels associated with different services requiring different QoS levels (such as the ATN-based ATC service, the SWIM-based ATC services and the AOC ones).

Even if LDACS has been introduced as an IP-based broadband data link supporting ICAO ATN-IPS standard, in the short-medium timeframe it is likely that several aircrafts will be equipped with LDACS transponders, but with ATC applications still based on ATN-OSI protocol.

Unlike VDL Mode 2, LDACS does not provide a standard method to associate a ground station LDACS address and the ATN AGR address. This is mandatory for ATN-OSI aircraft systems, because the aircraft needs to know what is the OSI (Open System Interconnection) address of the ATN Air-Ground Router, in order to establish a link with the ground ANSP network.

Therefore, a method for interfacing an LDACS ground station to ATN-OSI legacy network according to an aspect of the present invention is described in the following.

In particular, a new broadcast message is conveniently defined, containing the ATN OSI address necessary for the aircraft.

The following are two possible implementations:
a) by defining a new broadcast message that can be sent over the BC channel(s), has a fixed length and contains the ATN address parameter (48 bytes); the message is dynamic, i.e., in case the AGR address becomes "0", or any other invalid value, this means that either an AGR 18 is in failed state, or that an AGR 18 has become unreachable; the periodicity of the message is configurable and is repeated for every "virtual" ground station 25; this means that this new message is added to the above mentioned (SIB; ACB; STB) ;
b) by encapsulating the ATN OSI "ISH" message (Intermediate System Hello message), coming from the ATN AGR(s) 18, on a CC (Control Channel) channel; also in this case the ISH contains the "0" address in case of failure of an AGR 18 and its periodicity is configurable and repeated for every "virtual" ground station 25.

Then, the ground station 25 is conveniently provided with a "business logic" whose functions are:
- managing the information from ATN AGR(s) 18 (i.e. AGR status, ATN address) in order to prepare the broadcast message;
- establishing a layer 2/layer 3 link between the ground station 25 and the AGR(s) 18 (e.g., PPP, IP-SNDCF);
- supporting the ATN AGR connections towards each aircraft.

From the foregoing, the innovative features and the associated technical advantages of the present invention are immediately clear to those skilled in the art.

In particular, it is important to point out that the present invention:
- upgrades, in a new, innovative way, the solution according to EP 2 447 929 B1 so as to the support more than two ACSP networks;
- provides support for ANSPs providing ATC services without AOC to the so-called "non-AOC" aircrafts;
- introduces a priority mechanism for the VDL Mode 2 uplink;
- introduces a method for supporting multiple ACSPs for LDACS ground stations; and
- introduces a method for ATN AGR network address distribution to all aircrafts connected to the LDACS ground station.

Additionally, specific technical advantages provided by the present invention are the following:
- unlike the solution according to EP 2 447 929 B1, the present invention provides access to ATC services also to those aircrafts that do not have any contract with the ACSPs; this scenario is favorable for deploying of the data link infrastructure by an ANSP, because it is able to provide ATC services to every aircraft;
- unlike the solution according to EP 2 447 929 B1, the present invention "opens the door" for new potential ACSPs on the worldwide competition, which is nowadays restricted to only two ACSPs, allowing a better competition with advantages for their main stakeholders (i.e., the airlines);
- from the technical point of view, both the VDL Mode 2 and the LDACS scenarios require spectrum optimization strategies, as the service relies on the same bandwidth worldwide; the invention allows a better usage of the VHF spectrum by the use of QoS for ATC and AOC connections and it allows to reduce the LDACS ground station proliferation for providing the same service, avoiding the waste of spectrum;
- LDACS protocol has been conceived to support IP-based connections; nevertheless there shall be an "overlap period" on which LDACS shall support ATN connections too, in order to facilitate the transition towards IPS/SWIM-based services which will take a long time; by introducing the mechanism for ATN AGR address provision to the aircrafts connecting to the ground station 25, the invention allows extending the use of CPDLC/ADS-C over ATN (i.e., the ATN B2) through the support of LDACS protocol.

Finally, the present invention allow sharing the radio/channel resources between several operators, that can offer ATC services (for the ANSPs) and AOC services (for airlines), or ATC services only (e.g., for ANSPs, Air Forces/Agencies, etc.). In other words, the present invention optimizes the radio/channel resources thereby guaranteeing support for the new concepts of operation defined in SESAR (Single European Sky ATM Research) 1 and SESAR 2020 (e.g., the i4D / 4D application).

With specific reference to the solution described in EP 2 447 929 B1, it is worth stressing the point that the present invention, differently from said prior art document, allows to make a system implementing both VDL2 and LDACS technologies in an integrated manner on the ground and with an infrastructure totally transparent to upper OSI layers, which concept is, nowadays, totally new and non-foreseen. Moreover, also the non-AOC support according to the present invention is completely new (in fact, it is not present at all in EP 2 447 929 B1).

In particular, it is important to note that current VDL Mode 2 and future LDACS architectures do not allow an airline without a contract with an ACSP to implement CPDLC, which is mandatory to fly over FL285, as defined in the EC regulation 29/2009 (the so-called "Mandate"). In this respect, the present invention provides a simple, smart solution for non-AOC airlines to comply with the Mandate without changing anything in both software and configuration parameters on board the aircrafts, thus saving the global interoperability of aircrafts with ground systems during all flight phases (which is an "essential requirements" named "seamless operation", as defined in the EC regulation 552/2004).

Additionally, with specific reference to the ICAO paper *"Current Status of LDACS Developments"* by M. Schnell, it is important to stress the point that also this paper does not describe a combined use of VDL2 and LDACS. In fact, in this respect, said paper states only that *"a strategy has to be developed to migrate from current data link technologies, especially VDL Mode 2, to the more performant LDACS1 data link in a smooth and cost-effective manner. Supplementing VDL Mode 2 with LDACS1 might be a promising approach".* As it is clear to those skilled in thee art, this statement does not represent at all an enabling disclosure of a solution based on VDL2 and LDACS. On the contrary, the present invention relates to a specific solution allowing integrating both said operating modes, in order to provide a smooth transition from VDL2 towards LDACS, according to the above-mentioned global interoperability.

In particular, said ICAO paper does not describe at all that LDACS was primarily conceived to support IP-based communications, but not OSI-based ones. On the contrary, the present invention relates to a smart and innovative solution to accommodate OSI protocols over the LDACS radio interface, which solution solves mobile OSI addressing and connectivity issues.

Thence, the present invention can be seen as a solution enabling an "early entry" for LDACS (because this latter technology can overlap with VDL2 radio technology but without waiting for ATN-IPS overall protocol stack), thereby accelerating LDACS implementation roadmaps and allowing saving airlines investment on OSI technology (which shall not become obsolete if supported by LDACS too) .

More in detail, said ICAO paper mainly concerns LDACS radio features, but the LDACS standard is not limited only to radio requirements. Thence, in view of said ICAO paper, it is not straightforward at all for those skilled in the art to conceive a solution to accommodate multiple virtual stations within the same LDACS infrastructure, as well as support for OSI protocol within the LDACS protocol layers (i.e., without changing LDACS protocol structure). In fact, this requires having, at least, a detailed knowledge of Air Interface framing, physical and logical channels, mobility management protocol and parameters to be exchanged over the Air Interface between ground stations and airborne systems; nothing of this can be found in said ICAO paper, nor in any other solution/paper currently known.

In conclusion, it is clear that various modifications can be applied to the present invention without departing from the scope of the invention as defined in the appended claims.

## Claims

1. Ground station (25) for air-ground and ground-air communications, configured to provide an airline operational communications (AOC) service and an air traffic control (ATC) service; the ground station (25) including gateway means (253) coupled to:
• communications networks (13) connected to airline remote stations (14) for providing the airline operational communications service; and
• one or more air-ground routers (18) connected through one or more boundary intermediate systems (19) to one or more air navigation service provider remote stations (15) for providing the air traffic control service;
wherein the gateway means (253) are configured to:
• receive, through the communications networks (13), uplink AOC messages that are sent by the airline remote stations (14), carry information items related to the airline operational communications service, and are intended to be transmitted, each, to a respective one of first aircrafts (11,12) requiring both the airline operational communications service and the air traffic control service; and
• receive, from the air-ground router (s) (18), first uplink ATC messages that are sent by the air navigation service provider remote station (s) (15) to said air-ground router(s) (18) through the boundary intermediate system(s) (19), carry information items related to the air traffic control service, and are intended to be transmitted, each, to a respective first aircraft (11,12);
the ground station (25) further including ground-based VDL2 wireless communication means (251) coupled to the gateway means (253) and configured to:
• carry out radio communications based on VDL Mode 2 technology;
• receive, based on VDL Mode 2 technology, first downlink AOC messages and first downlink ATC messages from one or more of the first aircrafts (11,12); and
• provide the gateway means (253) with the first downlink AOC messages and the first downlink ATC messages;
wherein the first downlink AOC messages carry information items related to the airline operational communications service, and are intended to be routed, each, through a respective communications network (13) to reach a respective airline remote station (14);
wherein the first downlink ATC messages carry information items related to the air traffic control service, and are intended to be routed, each, to a respective air-ground router (18) to reach a respective air navigation service provider remote station (15) through the boundary intermediate system(s) (19);
and wherein the gateway means (253) are configured to route:
• each first downlink AOC message through the respective communications network (13) to reach the respective airline remote station (14); and
• each first downlink ATC message to the respective air-ground router (18) to reach the respective air navigation service provider remote station (15) through the boundary intermediate system(s) (19);
the ground station (25) further including ground-based LDACS wireless communication means (252) coupled to the gateway means (253) and configured to:
• carry out radio communications based on LDACS technology;
• receive, based on LDACS technology, second downlink AOC messages and second downlink ATC messages from one or more of the first aircrafts (11,12), and third downlink ATC messages from one or more second aircrafts (16,17) requiring only the air traffic control service; and
• provide the gateway means (253) with the second downlink AOC messages, the second downlink ATC messages and the third downlink ATC messages;
wherein the ground-based VDL2 wireless communication means (252) are further configured to:
• receive, based on VDL Mode 2 technology, fourth downlink ATC messages from one or more of the second aircrafts (11,12); and
• provide the gateway means (253) with the fourth downlink ATC messages;
wherein the second downlink AOC messages carry information items related to the airline operational communications service, and are intended to be routed, each, through a respective communications network (13) to reach a respective airline remote station (14);
wherein the second, third and fourth downlink ATC messages carry information items related to the air traffic control service, and are intended to be routed, each, to a respective air-ground router (18) to reach a respective air navigation service provider remote station (15) through the boundary intermediate system(s) (19);
wherein the gateway means (253) are further configured to:
• route each second downlink AOC message through the respective communications network (13) to reach the respective airline remote station (14);
• route each second, third and fourth downlink ATC message to the respective air-ground router (18) to reach the respective air navigation service provider remote station (15) through the boundary intermediate system(s) (19) ;
• receive, from the air-ground router(s) (18), second uplink ATC messages that are sent by the air navigation service provider remote station(s) (15) to said air-ground router(s) (18) through the boundary intermediate system(s) (19), carry information items related to the air traffic control service, and are intended to be transmitted, each, to a respective second aircraft (16,17); and
• selectively provide the uplink AOC messages, the first uplink ATC messages and the second uplink ATC messages to the ground-based VDL2 wireless communication means (251) and/or the ground-based LDACS wireless communication means (252);
wherein the ground-based VDL2 wireless communication means (251) are further configured to:
• put in one or more low-priority queues the uplink AOC messages received from the gateway means (253);
• put in one or more high-priority queues the first and second uplink ATC messages received from the gateway means (253);
• transmit, based on VDL Mode 2 technology, the first and second uplink ATC messages present in the high-priority queue(s) to the respective first and second aircrafts (11,12,16,17); and
• transmit, based on VDL Mode 2 technology, the uplink AOC messages present in the low-priority queue(s) to the respective first aircrafts (11,12) only when there are no first and second uplink ATC messages in the high-priority queue(s);
and wherein the ground-based LDACS wireless communication means (252) are further configured to periodically broadcast over one or more predefined LDACS broadcast channels:
• groups of predefined LDACS broadcast messages, wherein said groups of predefined LDACS broadcast messages carry information items identifying the communications networks (13); and
• single predefined LDACS broadcast messages carrying address(es) of the air-ground router (s) (18).

2. The ground station of claim 1, wherein the single predefined LDACS broadcast messages periodically broadcasted by the ground-based LDACS wireless communication means (252) carry Aeronautical Telecommunication Network (ATN) Open Systems Interconnection (OSI) address(es) of the air-ground router(s) (18).

3. The ground station according to claim 1 or 2, wherein the communications networks (13) are Aeronautical Communications Service Provider (ACSP) networks.

## Patentansprüche

1. Bodenstation (25) für Luft-Boden- und Boden-Luft-Kommunikation, die dazu ausgebildet ist, einen Airline Operational Communications Service (AOC) und einen Air Traffic Control Service (ATC) bereitzustellen; wobei die Bodenstation (25) Gateway-Einrichtungen (253) aufweist, welche gekoppelt sind mit:
• Kommunikationsnetzwerken (13), die mit entfernten Stationen der Fluggesellschaft (14) verbunden sind, um den Airline Operational Communications Service bereitzustellen; und
• einen oder mehrere Luft-Boden-Router (18), die über ein oder mehrere Boundary Intermediate Systeme (19) mit einer oder mehreren entfernten Stationen (15) des Flugsicherungsdienstleisters verbunden sind, um den Flugsicherungsdienst bereitzustellen;
wobei die Gateway-Einrichtungen (253) ausgebildet sind, um:
• über die Kommunikationsnetzwerke (13) Uplink-AOC-Nachrichten zu empfangen, die von den entfernten Stationen der Fluggesellschaft (14) gesendet werden, Informationselemente enthalten, die den operativen Kommunikationsdienst der Fluggesellschaft betreffen, und jeweils zum Senden an ein jeweiliges von erstes Flugzeugen (11, 12) bestimmt sind, die sowohl den operativen Kommunikationsdienst der Fluggesellschaft als auch den Flugsicherungsdienst benötigen; und
• von dem/den Luft-Boden-Router/-n (18) erste Uplink-ATC-Nachrichten zu empfangen, die von der/den entfernten Station/-en des Flugsicherungsdienstleisters (15) an den/die Luft-Boden-Router (18) über das/die Boundary Intermediate System/-e (19) gesendet werden, Informationselemente enthalten, die den Flugsicherungsdienst betreffen, und jeweils zur Übertragung an ein jeweiliges erstes Flugzeug (11, 12) bestimmt sind;
wobei die Bodenstation (25) ferner bodengestützte VDL2-Drahtlos-Kommunikationseinrichtungen (251) aufweist, die mit den Gateway-Einrichtungen (253) gekoppelt sind und konfiguriert sind, um:
• Funkkommunikation auf Basis der VDL Mode 2-Technologie durchzuführen;
• auf Basis der VDL Mode 2-Technologie erste Downlink-AOC-Nachrichten und erste Downlink-ATC-Nachrichten von einem oder mehreren der ersten Flugzeuge (11, 12) zu empfangen; und
• der Gateway-Einrichtung (253) die ersten Downlink-AOC-Nachrichten und die ersten Downlink-ATC-Nachrichten bereitzustellen;
wobei die ersten Downlink-AOC-Nachrichten Informationselemente enthalten, die den operativen Kommunikationsdienst der Fluggesellschaft betreffen, und die dazu bestimmt sind, jeweils über ein entsprechendes Kommunikationsnetzwerk (13) geleitet zu werden, um eine jeweilige entfernte Station (14) einer Fluggesellschaft zu erreichen;
wobei die ersten Downlink-ATC-Nachrichten Informationselemente enthalten, die den Flugsicherungsdienst betreffen, und dazu bestimmt sind,
jeweils zu einem jeweiligen Luft-Boden-Router (18) geleitet zu werden, um eine entsprechende entfernte Station (15) des Flugsicherungsdienstleisters über das/die Grenzzwischensystem/-e (19) zu erreichen;
und wobei die Gateway-Einrichtungen (253) ausgebildet sind, um:
• jede erste Downlink-AOC-Nachricht über das jeweilige Kommunikationsnetzwerk (13) zu leiten, um die jeweilige entfernte Station (14) der Fluggesellschaft (14) zu erreichen; und
• jede erste Downlink-ATC-Nachricht an den jeweiligen Luft-Boden-Router (18) zu leiten, um die entfernte Station (15) des jeweiligen Flugsicherungsdienstleisters über das/die Boundary Intermediate System/- e (19) zu erreichen;
wobei die Bodenstation (25) ferner bodengestützte drahtlose LDACS-Drahtlos-Kommunikationseinrichtungen (252) aufweist, die mit den Gateway-Einrichtungen (253) gekoppelt sind und ausgebildet sind, um:
• Funkkommunikation auf Basis der LDACS-Technologie durchzuführen;
• auf Basis der LDACS-Technologie, zweite Downlink-AOC-Nachrichten und zweite Downlink-ATC-Nachrichten von einem oder mehreren der ersten Flugzeuge (11, 12) und dritte Downlink-ATC-Nachrichten von einem oder mehreren zweiten Flugzeugen (16, 17) zu empfangen, die nur den Flugsicherungsdienst benötigen; und
• den Gateway-Einrichtungen (253) die zweiten Downlink-AOC-Nachrichten, die zweiten Downlink-ATC-Nachrichten und die dritten Downlink-ATC-Nachrichten bereitzustellen;
wobei die bodengestützten VDL2-Drahtlos-Kommunikationseinrichtungen (252) ferner ausgebildet sind, um:
• auf Basis der VDL Mode 2-Technologie vierte Downlink-ATC-Nachrichten von einem oder mehreren der zweiten Flugzeuge (11, 12) zu empfangen; und
• den Gateway-Einrichtungen (253) die vierten Downlink-ATC-Nachrichten bereitzustellen;
wobei die zweiten Downlink-AOC-Nachrichten Informationselemente enthalten, die den operativen Kommunikationsdienst der Fluggesellschaft betreffen, und dazu bestimmt sind, jeweils über ein jeweiliges Kommunikationsnetzwerk (13) geleitet zu werden, um eine jeweilige entfernte Station (14) der Fluggesellschaft zu erreichen;
wobei die zweiten, dritten und vierten Downlink-ATC-Nachrichten Informationselemente enthalten, die den Flugsicherungsdienst beziehen, und dazu bestimmt sind, jeweils zu einem jeweiligen Luft-Boden-Router (18) geleitet zu werden, um eine jeweilige entfernte Station (15) eines Flugsicherungsdienstleisters über das/die Boundary Intermediate System/- e (19) zu erreichen;
wobei die Gateway-Einrichtungen (253) ferner ausgebildet sind, um:
• jede zweite Downlink-AOC-Nachricht über das jeweilige Kommunikationsnetzwerk (13) zu leiten, um die jeweilige entfernte Station (14) der Fluggesellschaft zu erreichen;
• jede zweite, dritte und vierte Downlink-ATC-Nachricht an den jeweiligen Luft-Boden-Router (18) zu leiten, um die entfernte Station (15) des jeweiligen Flugsicherungsdienstleisters über das/die Boundary Intermediate System/-e (19) zu erreichen;
• von dem/den Luft-Boden-Router/-n (18) zweite Uplink-ATC-Nachrichten zu empfangen, die von den entfernten Stationen (15) des Flugsicherungsdienstleisters an den/die Luft-Boden-Router (18) über das/die Boundary Intermediate System/-e (19) gesendet werden, Informationselemente enthalten, die den Flugsicherungsdienst betreffen, und dazu bestimmt sind, jeweils an ein bestimmtes zweites Flugzeug (16, 17) übertragen zu werden; und
• die Uplink-AOC-Nachrichten, die ersten Uplink-ATC-Nachrichten und die zweiten Uplink-ATC-Nachrichten selektiv den bodengestützten VDL2-Drahtlos-Kommunikationseinrichtungen (251) und/oder den bodengestützten LDACS-Drahtlos-Kommunikationseinrichtungen (252) bereitzustellen;
wobei die bodengestützten VDL2-Drahtlos-Kommunikationseinrichtungen (251) ferner ausgebildet sind, um:
• die von den Gateway-Einrichtungen (253) empfangenen Uplink-AOC-Nachrichten in eine oder mehrere Warteschlangen mit niedriger Priorität einzustellen;
• die von den Gateway-Einrichtungen (253) empfangenen ersten und zweiten Uplink-ATC-Nachrichten in eine oder mehrere Warteschlangen mit hoher Priorität einzustellen;
• auf Basis der VDL-Modus-2-Technologie die ersten und zweiten Uplink-ATC-Nachrichten, die in der/den Warteschlange/-n mit hoher Priorität vorhanden sind, an die jeweiligen ersten und zweiten Flugzeuge (11, 12, 16, 17) zu senden; und
• auf Basis der VDL-Modus-2-Technologie die in der/den Warteschlange/-n mit niedriger Priorität vorhandenen Uplink-AOC-Nachrichten nur dann an die jeweiligen ersten Flugzeuge (11, 12) zu senden, wenn die die Warteschlange/-n mit hoher Priorität keine ersten und zweiten Uplink-ATC-Nachrichten enthalten;
und wobei die bodengestützten LDACS-Drahtlos-Kommunikationseinrichtungen (252) ferner derart ausgebildet sind, dass sie periodisch über einen oder mehrere vordefinierte LDACS-Broadcast-Kanäle senden:
• Gruppen vordefinierter LDACS-Broadcast-Nachrichten, wobei die Gruppen vordefinierter LDACS-Broadcast-Nachrichten Informationselemente enthalten, welche die Kommunikationsnetze identifizieren (13); und
• einzelne vordefinierte LDACS-Broadcast-Nachrichten, welche die Adresse/-n der/des Luft-Boden-Router/-s (18) enthalten.

2. Bodenstation nach Anspruch 1, bei welcher die einzelnen vordefinierten LDACS-Broadcast-Nachrichten, die periodisch von den bodengestützten LDACS-Drahtlos-Kommunikationseinrichtungen (252) gesendet werden, Aeronautical Telecommunication Network (ATN) Open System Interconnection (OSI) Adressen der Luft-Boden-Router (18) enthalten.

3. Bodenstation nach Anspruch 1 oder 2, bei welcher die Kommunikationsnetzwerke (13) Aeronautical Communications Service Provider (ACSP) Netzwerke sind.

## Revendications

1. Station au sol (25) pour des communications air-sol et sol-air, configurée pour assurer un service de communications opérationnelles de compagnies aériennes (AOC) et un service de contrôle du trafic aérien (ATC) ; la station au sol (25) incluant des moyens de passerelle (253) couplés à :
• des réseaux de communications (13) reliés à des stations hors site de compagnies aériennes (14) pour assurer le service de communications opérationnelles de compagnies aériennes ; et
• un ou plusieurs routeurs air-sol (18) reliés par l'intermédiaire d'un ou plusieurs systèmes intermédiaires limites (19) à une ou plusieurs stations hors site de fournisseur de service de navigation aérienne (15) pour assurer le service de contrôle du trafic aérien ;
dans laquelle les moyens de passerelle (253) sont configurés pour :
• recevoir, par l'intermédiaire des réseaux de communications (13), des messages AOC en liaison montante qui sont envoyés par les stations hors site de compagnies aériennes (14), véhiculent des éléments d'information liés au service de communications opérationnelles de compagnies aériennes, et sont destinés à être transmis, chacun, à un de premiers aéronefs (11, 12) respectif nécessitant à la fois le service de communications opérationnelles de compagnies aériennes et le service de contrôle du trafic aérien ; et
• recevoir, depuis le ou les routeurs air-sol (18), des premiers message ATC en liaison montante qui sont envoyés par la ou les stations hors site de fournisseur de service de navigation aérienne (15) audit ou auxdits routeurs air-sol (18) par l'intermédiaire du ou des systèmes intermédiaires limites (19), et véhiculent des éléments d'information liés au service de contrôle du trafic aérien et sont destinés à être chacun transmis à un premier aéronef (11, 12) respectif ;
la station au sol (25) incluant en outre des moyens de communication sans fil VDL2 basés au sol (251) reliés aux moyens de passerelle (253) et configurés pour :
• réaliser des communications radio sur la base de la technologie VDL mode 2 ;
• recevoir, sur la base de la technologie VDL mode 2, des premiers messages AOC en liaison descendante et des premiers messages ATC en liaison descendante en provenance d'un ou plusieurs des premiers aéronefs (11, 12) ;
• fournir aux moyens de passerelle (253) les premiers messages AOC en liaison descendante et les premiers messages ATC en liaison descendante ;
dans laquelle les premiers messages AOC en liaison descendante véhiculent des éléments d'information liés au service de communications opérationnelles de compagnies aériennes, et sont destinés à être acheminés, chacun, par l'intermédiaire d'un réseau de communications (13) respectif pour atteindre une station hors site de compagnie aérienne (14) respective ;
dans laquelle les premiers messages ATC en liaison descendante véhiculent des éléments d'information liés au service de contrôle du trafic aérien, et sont destinés à être acheminés, chacun, jusqu'à un routeur air-sol (18) respectif pour atteindre une station hors site de fournisseur de service de navigation aérienne (15) respective par l'intermédiaire du ou des systèmes intermédiaires limites (19) ;
et dans laquelle les moyens de passerelle (253) sont configurés pour acheminer :
• chaque premier message AOC en liaison descendante par l'intermédiaire du réseau de communications (13) respectif pour atteindre la station hors site de compagnie aérienne (14) respective ; et
• chaque premier message ATC en liaison descendante au routeur air-sol (18) respectif pour atteindre la station hors site de fournisseur de service de navigation aérienne (15) respective par l'intermédiaire du ou des systèmes intermédiaires limites (19) ;
la station au sol (25) incluant en outre des moyens de communication sans fil LDACS basés au sol (252) reliés aux moyens de passerelle (253) et configurés pour :
• réaliser des communications radio sur la base de la technologie LDACS ;
• recevoir, sur la base de la technologie LDACS, des deuxièmes messages AOC en liaison descendante et des deuxièmes messages ATC en liaison descendante en provenance d'un ou plusieurs des premiers aéronefs (11, 12), et des troisièmes messages ATC en liaison descendante en provenance d'un ou plusieurs deuxièmes aéronefs (16, 17) nécessitant uniquement le service de contrôle du trafic aérien ; et
• fournir aux moyens de passerelle (253) les deuxièmes messages AOC en liaison descendante, les deuxièmes messages ATC en liaison descendante et les troisièmes messages ATC en liaison descendante ;
dans laquelle les moyens de communication sans fil VDL mode 2 basés au sol (252) sont en outre configurés pour :
• recevoir, sur la base de la technologie VDL mode 2, des quatrièmes messages ATC en liaison descendante en provenance d'un ou plusieurs des deuxièmes aéronefs (11, 12) ; et
• fournir aux moyens de passerelle (253) les quatrièmes messages ATC en liaison descendante ;
dans laquelle les deuxièmes messages AOC en liaison descendante véhiculent des éléments d'information liés au service de communications opérationnelles de compagnie aériennes, et sont destinés à être acheminés, chacun, par l'intermédiaire d'un réseau de communications (13) respectif pour atteindre une station hors site de compagnie aérienne (14) respective ;
dans laquelle les deuxièmes, troisièmes et quatrièmes messages ATC en liaison descendante véhiculent des éléments d'information liés au service de contrôle du trafic aérien, et sont destinés à être acheminés, chacun, jusqu'à un routeur air-sol (18) respectif pour atteindre une station hors site de fournisseur de service de navigation aérienne (15) respective par l'intermédiaire du ou des systèmes intermédiaires limites (19) ;
dans laquelle les moyens de passerelle (253) sont en outre configurés pour :
• acheminer chaque deuxième message AOC en liaison descendante par l'intermédiaire du réseau de communications (13) respectif pour atteindre la station hors site de compagnie aérienne (14) respective ;
• acheminer chaque deuxième, troisième et quatrième message ATC en liaison descendante jusqu'au routeur air-sol (18) respectif pour atteindre la station hors site de fournisseur de service de compagnie aérienne (15) respective par l'intermédiaire du ou des systèmes intermédiaires limites (19) ;
• recevoir, depuis le ou les routeurs air-sol (18), des deuxièmes messages ATC en liaison montante qui sont envoyés par la ou les stations hors site de fournisseur de service de compagnie aérienne (15) audit ou auxdits routeurs air-sol (18) par l'intermédiaire du ou des systèmes intermédiaires limites (19), véhiculent des éléments d'information liés au service de contrôle du trafic aérien et sont destinés à être transmis, chacun, à un deuxième aéronef (16, 17) respectif ; et
• fournir sélectivement les messages AOC en liaison montante, les premiers messages ATC en liaison montante et les deuxièmes messages ATC en liaison montante aux moyens de communication sans fil VDL2 basés au sol (251) et/ou aux moyens de communication sans fil LDACS basés au sol (252) ;
dans laquelle les moyens de communication sans fil VDL2 basés au sol (251) sont en outre configurés pour :
• placer dans une ou plusieurs files d'attente à faible priorité, les messages AOC en liaison montante reçus en provenance des moyens de passerelles (253) ;
• placer dans une ou plusieurs files d'attente à priorité élevée les premiers et deuxièmes messages ATC en liaison montante reçus en provenance des moyens de passerelles (253) ;
• transmettre, sur la base de la technologie VDL mode 2, les premiers et deuxièmes messages ATC en liaison montante présents dans la ou les files d'attente à priorité élevée aux premiers et deuxièmes aéronefs (11, 12, 16, 17) respectifs ;
• transmettre, sur la base de la technologie VDL mode 2, les messages AOC en liaison montante présents dans la ou les files d'attente à faible priorité aux premiers aéronefs (11, 12) respectifs, uniquement lorsqu'il n'existe pas de premier ni de deuxième messages ATC en liaison montante dans la ou les files d'attente à priorité élevée ;
et dans laquelle les moyens de communication sans fil LDACS basés au sol (252) sont en outre configurés pour diffuser périodiquement sur un ou plusieurs canaux de diffusion LDACS prédéfinis :
• des groupes de messages diffusés LDACS prédéfinis, dans laquelle lesdits groupes de messages diffusés LDACS prédéfinis véhiculent des éléments d'information identifiant les réseaux de communications (13) ; et
• des messages diffusés LDACS prédéfinis uniques véhiculant une ou des adresses du ou des routeurs air-sol (18).

2. Station au sol selon la revendication 1, dans laquelle les messages diffusés LDACS prédéfinis uniques diffusés périodiquement par les moyens de communication sans fil LDACS basés au sol (252) véhiculent une ou des adresses d'interconnexions de systèmes ouverts (OSI) de réseau de télécommunications aéronautiques (ATN) du ou des routeurs air-sol (18).

3. Station au sol selon la revendication 1 ou 2, dans laquelle les réseaux de communications (13) sont des réseaux de fournisseur de service de communications aéronautiques (ACSP).
